# DEMANDE DE BREVET EUROPEEN

(11) **EP 4 442 664 A2**
(43) Date de publication de la demande: **09.10.2024**
(21) Numéro de dépôt: 24190730.2
(22) Date de dépôt: 19.11.2018
(51) Int. Cl.: C03C 17/36

(54) **MATERIAU COMPRENANT UNE SEULE COUCHE FONCTIONNELLE A BASE D'ARGENT ET UNE COUCHE ABSORBANTE**

(30) Priorité: 20.11.2017 FR 1760922
(62) Demande divisionnaire de: 18829898.8
(71) Demandeur: SAINT-GOBAIN GLASS FRANCE, 92400 Courbevoie (FR)
(72) Inventeur: MARIANI, Silvia, 92400 COURBEVOIE (FR); CHERY, Vincent, 92400 COURBEVOIE (FR); DELBECQ, Cécile, 93300 AUBERVILLIERS (FR)
(74) Mandataire: Saint-Gobain Recherche

(57) **Abrégé**

L'invention concerne un matériau comprenant un substrat transparent revêtu d'un empilement de couches minces comprenant un revêtement inférieur comprenant au moins une couche absorbante, une seule couche métallique fonctionnelle à base d'argent et un revêtement supérieur comportant au moins une couche diélectrique. La couche absorbante est séparée du substrat et de la couche fonctionnelle par une ou plusieurs couches diélectriques. Le matériau une fois monté dans un double vitrage, permet d'obtenir une sélectivité élevée notamment supérieure à 1,45, une réflexion lumineuse intérieure et extérieure inférieures à 25 % et des teintes bleutées en réflexion extérieure et en réflexion intérieure.

## Description

L'invention concerne un matériau comprenant un substrat transparent revêtu d'un empilement de couches minces comprenant une seule couche métallique fonctionnelle à base d'argent et une couche absorbante. L'invention concerne également un vitrage comprenant le matériau.

Les couches métalliques fonctionnelles à base d'argent (ou couches d'argent) ont des propriétés de conduction électrique et de réflexion des rayonnements infrarouges (IR) avantageuses, d'où leur utilisation dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule.

Ces couches d'argent sont déposées entre des revêtements à base de matériaux diélectriques comprenant généralement plusieurs couches diélectriques (ci-après revêtements diélectriques) permettant d'ajuster les propriétés optiques de l'empilement. Ces couches diélectriques permettent en outre de protéger la couche d'argent des agressions chimiques ou mécaniques.

Dans les pays où les niveaux d'ensoleillement sont élevés, les vitrages bas émissifs pour les applications « dites résidentielles » doivent présenter également l'effet contrôle solaire.

Pour atteindre cet objectif, une solution consiste à augmenter l'épaisseur de la couche métallique fonctionnelle à base d'argent jusqu'à obtention du niveau désiré de transmission énergétique. Ceci résulte néanmoins en une augmentation de la réflexion lumineuse jusqu'à des niveaux jugés esthétiquement indésirables notamment supérieurs à 25% ou même 27%.

Pour pallier cet inconvénient, une autre solution proposée consiste à introduire de la matière absorbante sous forme d'une couche absorbante dans l'empilement. L'objectif visé est de diminuer la transmission énergétique tout en limitant à un niveau acceptable l'augmentation de réflexion lumineuse.

Plusieurs documents divulguent l'utilisation de couches absorbantes dans des empilements à plusieurs couches fonctionnelles. La complexité de ces empilements ne permet pas de transposer l'enseignement de ces documents pour la conception d'un empilement à une seule couche fonctionnelle.

Il existe également des documents divulguant des empilements de couches minces comprenant une seule couche fonctionnelle et une ou plusieurs couches absorbantes. L'introduction de ces couches absorbantes permet de diminuer la réflexion lumineuse. Cependant, aucune des solutions divulguées dans ces documents ne donne entière satisfaction.

L'invention s'intéresse précisément à développer un matériau comprenant un empilement à une seule couche fonctionnelle à base d'argent, le matériau une fois monté dans un double vitrage, permet d'obtenir :
- une sélectivité élevée notamment supérieure à 1,45,
- une réflexion lumineuse intérieure et extérieure inférieures à 25 %, de préférence comprise entre 15 et 25 %,
- des teintes bleutées en réflexion extérieure,
- des teintes bleutées en réflexion intérieure,
- des teintes non-jaunes en transmission, de préférence aussi neutres que possible.

L'obtention de teintes bleutées en réflexion intérieure et extérieure est un objectif essentiel de l'invention.

La sélectivité « S », correspond au rapport de la transmission lumineuse TLᵥᵢₛ dans le visible du vitrage sur le facteur solaire FS du vitrage (S = TLᵥᵢₛ / FS). Le facteur solaire « FS » correspond au rapport en % entre l'énergie totale entrant dans le local à travers le vitrage et l'énergie solaire incidente.

Toutes les caractéristiques lumineuses décrites sont obtenues selon les principes et méthodes de la norme européenne EN 410 se rapportant à la détermination des caractéristiques lumineuses et solaires des vitrages utilisés dans le verre pour la construction.

Les propriétés telles que la sélectivité, la réflexion lumineuse extérieure ou intérieure et les propriétés colorimétriques sont calculées avec :
- des matériaux comprenant un substrat revêtu d'un empilement à une seule couche fonctionnelle montés dans un double vitrage,
- le double vitrage a une configuration : 4-16(Ar-90%)-4, c'est-à-dire une configuration constituée d'un matériau comprenant un substrat et d'un autre substrat de verre de 4 mm, les deux substrats sont séparés par une lame de gaz intercalaire à 90 % d'argon et 10 % d'air d'une épaisseur de 16 mm,
- l'empilement est positionné en face 2.

Un vitrage pour le bâtiment délimite en général deux espaces, un espace qualifié d'« extérieur » et un espace qualifié d'« intérieur ». On considère que la lumière solaire entrant dans un bâtiment va de l'extérieur vers l'intérieur. L'empilement est soit situé :
- en face 2, c'est-à-dire sur le substrat le plus à l'extérieur du bâtiment; sur sa face tournée vers la lame de gaz intercalaire,
- en face 3, c'est-à-dire sur le substrat le plus à l'intérieur du bâtiment; sur sa face tournée vers la lame de gaz intercalaire.

Selon l'invention, les caractéristiques lumineuses sont mesurées selon l'illuminant D65 à 2° perpendiculairement au matériau monté dans un double vitrage :
- TL correspond à la transmission lumineuse dans le visible en %,
- Rext correspond à la réflexion lumineuse extérieure dans le visible en %, observateur côté espace extérieur,
- Rint correspond à la réflexion lumineuse intérieure dans le visible en %, observateur coté espace intérieur,
- a*T et b*T correspondent aux couleurs en transmission a* et b* dans le système L*a*b*,
- a*Rext et b*Rext correspondent aux couleurs en réflexion a* et b* dans le système L*a*b*, observateur côté espace extérieur,
- a*Rint et b*Rint correspondent aux couleurs en réflexion a* et b* dans le système L*a*b*, observateur côté espace intérieur.

Selon l'invention :
- des teintes bleutées en réflexion extérieure sont définies par des valeurs de b*Rext inférieures à -5, voire -6, et mieux -8 et éventuellement des valeurs de a*Rext positives et inférieures à 5, voire à 3,
- des teintes bleutées en réflexion intérieure sont définies par des valeurs de b* Rint inférieures à -5, voire -6, et mieux -8 et éventuellement des valeurs de a*Rint positives et inférieures à 5, voire à 3,
- des teintes non-jaunes en transmission, de préférence aussi neutres que possible, sont définies par des valeurs b*t, inférieures à 6.

Les solutions développées dans l'art antérieur, notamment dans les demandes WO 2010/072973, WO 2010/072974 et WO 2014/044984, présentent :
- une sélectivité trop faible alors que classiquement des vitrages comprenant des empilements à une seule couche fonctionnelle ne comportant pas de couche absorbante peuvent présenter une sélectivité proche de 1,5, et/ou
- une réflexion lumineuse intérieure et/ou extérieure trop élevée notamment supérieure à 25 %,
- des teintes autres que bleutées en réflexion intérieure et extérieure (b*Rext et b*Rint supérieurs à -4) ou jaune en transmission (b*T supérieur à 6).

Le but de l'invention est de parvenir à remédier aux inconvénients de l'art antérieur, en mettant au point un nouveau type d'empilement à une seule couche fonctionnelle, empilement qui confère au double vitrage l'incorporant, une sélectivité élevée notamment supérieure à 1,45, voire supérieure à 1,5, une réflexion lumineuse coté extérieur et intérieur inférieures à 25 %, une couleur relativement neutre en transmission et bleue en réflexion coté extérieur et coté intérieur.

L'invention concerne un matériau comprenant un substrat transparent revêtu d'un empilement de couches minces comprenant en partant du substrat :
- un revêtement inférieur comprenant :
   - au moins une couche diélectrique,
   - au moins une couche absorbante présentant une épaisseur comprise entre 0,2 et 9 nm,
   - au moins une couche diélectrique,
- une seule couche métallique fonctionnelle à base d'argent,
- éventuellement une couche de blocage,
- un revêtement supérieur comportant au moins une couche diélectrique,
- éventuellement une couche de protection,
caractérisé en ce que
- la couche absorbante est séparée du substrat et de la couche fonctionnelle par une ou plusieurs couches diélectriques,
- l'épaisseur de toutes les couches diélectriques interposées entre la couche absorbante et la couche métallique fonctionnelle est comprise entre 3 et 18 nm.

La couche absorbante absorbe le rayonnement solaire dans la partie visible du spectre.

L'invention concerne également un vitrage multiple comprenant au moins un matériau selon l'invention et au moins un second substrat, le matériau et le second substrat sont séparés par au moins une lame de gaz intercalaire. De préférence, l'empilement est positionné en face 2.

Lorsque le matériau est monté dans un double vitrage avec l'empilement positionné en face 2, le double vitrage présente :
- une sélectivité supérieure à 1,45,
- une réflexion lumineuse intérieure et extérieure inférieures à 25 %,
- une valeur de b* en réflexion extérieure (b*Rext) inférieures à -5,
- une valeur de b* en réflexion intérieure (b*Rint) inférieures à -5.

Les objectifs de l'invention peuvent être convertis en propriétés d'absorption. Les objectifs sont :
- une sélectivité élevée, c'est-à-dire un facteur solaire bas et transmission lumineuse élevée,
- une réflexion lumineuse faible,
- des modifications qui ne doivent pas induire un décalage indésirable :
- de la couleur en transmission vers jaune,
- de la couleur en réflexion vers le rouge.

En transmission, on cherche :
- une absorption élevée de la partie rouge du spectre visible et des IR, c'est à dire une absorption élevée des longueurs d'ondes à partir de 600 nm, et
- une faible absorption dans le reste du spectre visible afin de maintenir une transmission lumineuse élevée.

En réflexion, on cherche :
- une absorption élevée en particulier de la partie rouge du spectre visible,
- une absorption modérée de la partie bleu-vert du spectre visible, c'est à dire des longueurs d'ondes d'environ 450 nm.

L'absorption d'énergie lumineuse dans un empilement de couche minces, attribuable à la présence d'une couche absorbante, dépend à la fois de la nature de la couche absorbante, épaisseur et matériau la constituant, mais également de la position où la couche absorbante est située dans l'empilement.

L'amplitude locale du champ électrique au niveau d'une couche de l'empilement dépend de sa position dans l'empilement qui fonctionne comme un filtre interférentiel. L'absorption d'énergie lumineuse varie proportionnellement par rapport à l'amplitude de ce champ électrique.

Si la couche absorbante est placée à un endroit de l'empilement où l'amplitude du champ électrique pour une longueur d'onde donnée est grande, l'absorption de cette longueur d'onde sera plus importante par rapport à un empilement comprenant la même couche absorbante placée à un endroit où l'amplitude du champ électrique est plus faible.

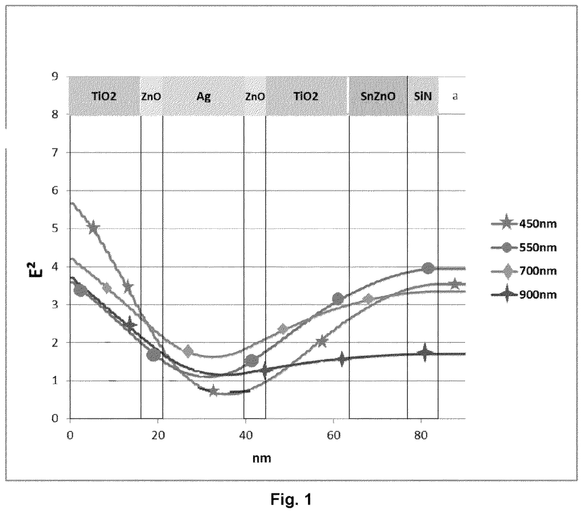

La figure 1 illustre les variations d'amplitude du champ électrique (E² en unité arbitraire), à différentes longueurs d'onde, en fonction de l'éloignement du substrat (en nm), pour un empilement type dont la succession de couches en partant du substrat est décrite en abscisse supérieure. Les longueurs d'onde choisies illustrent respectivement :
- 450 nm : le champ chromatique du bleu,
- 550 nm : le champ chromatique du vert,
- 700 nm : le champ chromatique du rouge,
- 900 nm : les IR.

Les observations suivantes peuvent être faites :
- à proximité du substrat, l'amplitude du champ électrique pour une longueur d'onde de 450 nm est élevée et relativement beaucoup plus élevée que l'amplitude du champ électrique pour une longueur d'onde à 700 nm,
- à proximité et en dessous de la couche d'argent, l'amplitude du champ électrique pour une longueur d'onde de 450 nm, de 550 nm et de 700 nm est du même ordre de grandeur.

Le demandeur a ainsi mis en évidence que, dans un empilement à une seule couche d'argent, l'intensité du champ électrique pour les courtes longueurs d'onde du visible correspondant au bleu, est particulièrement grande à proximité du substrat et diminue de manière très importante lorsque l'on se rapproche de la couche d'argent. Ces courtes longueurs d'onde sont de l'ordre de 400 à 450 nm.

Le demandeur montre ainsi qu'il est possible d'augmenter ou de réduire sélectivement les propriétés d'absorption de l'empilement pour certaines longueurs d'ondes. Pour cela, il est possible de sélectionner avantageusement la position de la couche absorbante en la plaçant à un endroit de l'empilement où l'amplitude du champ électrique pour cette longueur d'onde est grande ou faible.

De manière surprenante, en configurant l'empilement pour sélectivement :
- ne pas absorber significativement les courtes longueurs d'ondes correspondant à la couleur bleue, mais
- favoriser l'absorption des autres longueurs d'onde,
on obtient un matériau présentant à la fois :
- la teinte recherchée en réflexion, à savoir une teinte bleutée,
- une faible réflexion côté extérieur et intérieur,
- une forte sélectivité.

Toutefois, la couche absorbante est avantageusement séparée de la couche fonctionnelle métallique par une ou plusieurs couches diélectriques afin d'éviter toute dégradation de la couche fonctionnelle ou de la couche absorbante.

La solution de l'invention consiste donc à positionner une couche absorbante à un endroit bien précis dans un empilement comprenant une seule couche métallique fonctionnelle. Positionner la couche absorbante à proximité de la couche fonctionnelle permet :
- d'absorber le moins possible de lumière bleue pour obtenir une teinte bleutée en réflexion,
- d'éviter de produire une teinte excessivement jaune en transmission,
- de prévenir toute détérioration de la couche fonctionnelle ou de la couche absorbante.

L'invention concerne également :
- le vitrage comprenant au moins un matériau selon l'invention,
- le procédé de préparation d'un matériau selon l'invention,
- l'utilisation d'un vitrage selon l'invention en tant que vitrage de contrôle solaire pour le bâtiment ou les véhicules,
- un bâtiment ou un véhicule comprenant un vitrage selon l'invention.

Dans une configuration de double vitrage, la présente invention permet d'obtenir une sélectivité S élevée notamment supérieure à 1,45, voire supérieure à 1,5, un facteur solaire (FS), inférieur à 45 %, des couleurs neutres en transmission et un aspect bleuté en réflexion extérieure et intérieure.

Le matériau utilisé en double vitrage peut présenter en outre les caractéristiques suivantes:
- une sélectivité supérieure à 1,50,
- une transmission lumineuse, par ordre de préférence croissant, supérieure ou égale à 50 %, supérieure ou égale à 55 %, supérieure ou égale à 60 %, comprise entre 50 et 70 %,
- un facteur solaire, par ordre de préférence croissant, inférieur à 45 %, 44 %, 43 %,
- une réflexion extérieure, par ordre de préférence croissant, inférieure à 24 %, inférieure à 22 %, ou comprise entre 20 et 23 %,
- une réflexion intérieure, par ordre de préférence croissant, inférieure à 24 %, inférieure à 22 %, inférieure à 21 %, ou comprise entre 18 et 21 %.

Les caractéristiques préférées qui figurent dans la suite de la description sont applicables aussi bien au matériau selon l'invention que, le cas échéant, au vitrage ou au procédé selon l'invention.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Par « couche absorbante » au sens de la présente invention, on entend une couche en un matériau présentant un rapport n/K sur toute la plage de longueur d'onde du visible (de 380 nm à 780 nm) entre 0 et 5 en excluant ces valeurs et présentant une résistivité électrique à l'état massif (telle que connue dans la littérature) supérieure à 10⁻⁶ Ω.cm. n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

De préférence, l'absorption lumineuse, donc l'absorption du rayonnement solaire dans la partie visible du spectre, due à la couche absorbante, mesurée en déposant uniquement cette couche absorbante enfermée entre ses deux couches diélectriques sur du verre clair ordinaire de 4 mm d'épaisseur, mesurée côté verre, est comprise entre 5% et 45%, de préférence entre 10% et 35%.

La couche absorbante est choisie parmi :
- les couches métalliques à base d'un métal ou d'un alliage métallique,
- les couches de nitrure métallique et
- les couches d'oxynitrure métallique,
d'un ou plusieurs éléments choisis parmi le palladium, le niobium, le tungstène, l'acier inoxydable, le titane, le chrome, le molybdène, le zirconium, le nickel, le tantale, le zinc.

La couche absorbante solaire peut être essentiellement sous forme métallique. Bien qu'essentiellement sous forme métallique, le métal peut présenter des traces de nitruration dues à l'atmosphère de dépôt polluée par l'azote des zones de dépôt voisines. De préférence, la couche absorbante est un métal choisi parmi le palladium, le niobium, le tungstène, l'acier inoxydable, le titane, le chrome, le molybdène, le zirconium, le nickel, le tantale, le zinc, des alliages comme NiCr, NiCrW, WTa, WCr, NbZr, TaNiV, CrZr et NbCr.

La couche absorbante peut être un nitrure ou un sous-nitrure, c'est-à-dire un nitrure sous-stoechiométrique en azote. De préférence, la couche absorbant le rayonnement solaire est un nitrure choisi parmi TiN, NiCrWN, NiVN, TaN, CrN, ZrN, CrZrN, TiAIN, TiZrN, WN, SiZrN et SiNiCrN.

Avantageusement, la couche absorbante peut être choisie parmi les couche à base de Ti, TiN, Nb, NbN, Ni, NiN, Cr, CrN, NiCr, NiCrN.

Selon les modes de réalisation préférés, la couche absorbante est une couche de nitrure de titane TiN ou une couche métallique d'alliage de nickel et de chrome NiCr.

De préférence, l'empilement comprend une seule couche absorbante. Cela signifie notamment que le revêtement supérieur ne comprend pas de couche absorbante.

L'épaisseur de la couche absorbante, est par ordre de préférence croissant comprise de 0,2 à 9 nm, de 0,3 à 5 nm, de 0,35 à 3 nm, de 0,35 à 0,45 nm.

L'épaisseur de toutes les couches interposées entre la couche absorbante et la couche fonctionnelle est par ordre de préférence croissant :
- supérieure à 3 nm, supérieure à 4 nm, supérieure à 5 nm, ou
- inférieure à 18 nm, inférieure à 17 nm, inférieure à 16 nm, inférieure à 1 nm, inférieure à 14 nm, inférieure à 13 nm, inférieure à 12 nm, inférieure à 11 nm, inférieure à 10 nm, ou
- comprise entre 3 et 18 nm, comprise entre 3 et 15 nm, comprise entre 3 et 10 nm.

L'épaisseur de toutes les couches interposées entre la couche absorbante et le substrat est, par ordre de préférence croissant :
- supérieure à 11 nm, supérieure à 12 nm, supérieure à 13 nm, supérieure à 14 nm, supérieure à 15 nm, supérieure à 16 nm supérieure à 17 nm, supérieure à 18 nm,
- comprise entre 11 et 30 nm, comprise entre 12 et 25 nm, comprise entre 15 et 20 nm.

Selon l'invention, l'empilement comprend une seule couche métallique fonctionnelle à base d'argent. Ce type d'empilement est également désigné « empilement monocouche fonctionnelle ». Cela signifie que l'empilement ne comprend pas d'autre couche fonctionnelle à base d'argent.

Une couche fonctionnelle métallique à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

La couche métallique fonctionnelle à base d'argent peut également comprendre des éléments dopants choisis, par exemple, parmi le cuivre, le palladium, l'or ou le platine. De préférence, chacun de ces éléments dopants représentent moins de 15 %, moins de 10 %, moins de 5%, moins de 1 %, moins de 0,5 % en masse de la couche métallique fonctionnelle à base d'argent. Les proportions maximum d'élément dopant dépendent de la nature de l'élément dopant.

De préférence, la couche métallique fonctionnelle à base d'argent comprend moins de 5 %, de préférence moins de 1,0 %, voire moins de 0,5 % en masse d'éléments dopants.

L'épaisseur de la couche fonctionnelle à base d'argent, est par ordre de préférence croissant comprise de 5 à 25 nm, de 10 à 20 nm, de 12 à 19 nm, de 14 à 18 nm.

La couche fonctionnelle métallique à base d'argent peut être protégée par une couche qualifiée de couche de blocage. Selon ce mode de réalisation, l'empilement de couches minces comprend en outre au moins une couche de blocage située au contact et au-dessus de la couche fonctionnelle métallique.

Les couches de blocage sont choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome, le tantale et le niobium telles que Ti, TiN, TiOx, Nb, NbN, Ni, NiN, Cr, CrN, NiCr, NiCrN. Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Les couches de blocage sont de préférence choisies parmi les couches métalliques notamment d'un alliage de nickel et de chrome (NiCr) ou de titane.

Chaque couche de blocage présente une épaisseur comprise entre 0,1 et 2,0 nm. L'épaisseur de ces couches de blocage est, par ordre de préférence croissant:
- d'au moins 0,1 nm, d'au moins 0,2 nm et/ou
- d'au plus 2,0 nm, d'au plus 1 nm.

Les couches de blocage, bien que déposées sous forme métalliques et présentées comme étant des couches métalliques, sont dans la pratique des couches oxydées car leur fonction première est de s'oxyder au cours du dépôt de l'empilement afin de protéger la couche fonctionnelle. Selon l'invention, les couches de blocage ne sont pas des couches absorbantes.

L'empilement de couches minces comprend au moins une couche fonctionnelle et au moins deux revêtements comportant au moins une couche diélectrique, de manière à ce que chaque couche fonctionnelle soit disposée entre deux revêtements.

L'empilement est situé sur au moins une des faces du substrat transparent.

Par « revêtement » au sens de la présente invention, il faut comprendre qu'il peut y avoir une seule couche ou plusieurs couches de matériaux différents à l'intérieur du revêtement.

L'épaisseur d'un revêtement inférieur ou supérieur correspond à la somme des épaisseurs des couches le constituant.

Les revêtements inférieur et supérieur présentent une épaisseur supérieure à 15 nm, de préférence comprise entre 15 et 100 nm, 20 et 70 nm et mieux entre 30 et 60 nm.

Ces revêtements ont, par ordre de préférence croissant, une épaisseur :
- inférieure ou égale à 100 nm, inférieure ou égale à 80 nm, inférieure ou égale à 60 nm, et/ou
- supérieure ou égale à 15 nm, supérieure ou égale à 20 nm.

Par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Les couches diélectriques des revêtements présentent les caractéristiques suivantes seules ou en combinaison :
- elles sont déposées par pulvérisation cathodique assistée par champ magnétique,
- elles sont choisies parmi les oxydes ou nitrures d'un ou plusieurs éléments choisi(s) parmi le titane, le silicium, l'aluminium, le zirconium, l'étain et le zinc,
- elles ont une épaisseur supérieure à 2 nm, de préférence comprise entre 2 et 100 nm.

Les couches diélectriques peuvent être des couches qualifiées de couches de mouillage. On entend par couche de mouillage, une couche en un matériau apte à stabiliser l'interface avec la couche fonctionnelle. Ces couches de mouillage sont en général à base d'oxyde de zinc.

La couche d'oxyde de zinc peut être éventuellement dopée à l'aide d'au moins un autre élément, comme l'aluminium. L'oxyde de zinc est cristallisé. La couche à base d'oxyde de zinc comprend, par ordre de préférence croissant au moins 90,0 %, au moins 92 %, au moins 95 %, au moins 98,0 % en masse de zinc par rapport à la masse d'éléments autres que de l'oxygène dans la couche à base d'oxyde de zinc.

De préférence, le revêtement inférieur comprend une couche diélectrique à base d'oxyde de zinc située directement au contact de la couche métallique à base d'argent. Cette couche diélectrique à base d'oxyde de zinc peut être située directement au contact de la couche absorbante.

Les couches d'oxyde de zinc ont, par ordre de préférence croissant, une épaisseur :
- d'au moins 3,0 nm, d'au moins 4,0 nm, d'au moins 5,0 nm, et/ou
- d'au plus 25 nm, d'au plus 10 nm, d'au plus 8,0 nm.

Les couches diélectriques peuvent présenter une fonction barrière. On entend par couches diélectriques à fonction barrière (ci-après couche barrière), une couche en un matériau apte à faire barrière à la diffusion de l'oxygène et de l'eau à haute température, provenant de l'atmosphère ambiante ou du substrat transparent, vers la couche fonctionnelle. De telles couches diélectriques sont choisies parmi les couches :
- à base de composés de silicium et/ou d'aluminium choisis parmi les oxydes tels que SiOz, les nitrures tels que les nitrure de silicium Si₃N₄ et les nitrures d'aluminium AIN, et les oxynitrures SiOₓN_{y}, éventuellement dopé à l'aide d'au moins un autre élément,
- à base d'oxyde de zinc et d'étain,
- à base d'oxyde de titane.

De préférence, chaque revêtement comporte au moins une couche diélectrique constituée :
- d'un nitrure ou d'un oxynitrure d'aluminium et/ou de silicium ou
- d'un oxyde mixte de zinc et d'étain, ou
- d'un oxyde de titane.

Ces couches diélectriques ont, par ordre de préférence croissant, une épaisseur :
- inférieure ou égale à 40 nm, inférieure ou égale à 30 nm, inférieure ou égale à 25 nm, et/ou
- supérieure ou égale à 5 nm, supérieure ou égale à 10 nm ou supérieure ou égale à 15 nm.

Les couches diélectriques peuvent également être choisies en fonction de leur indice de réfraction.

Selon un mode de réalisation, le revêtement inférieur et/ou le revêtement supérieur comprend au moins une couche haut-indice à base d'oxyde métallique, présentant un indice de réfraction supérieur à 2,20, de préférence compris entre 2,3 et 2,7, et une épaisseur supérieure à 5 nm.

De préférence, le revêtement inférieur comprend au moins une couche haut-indice au contact du substrat.

De préférence, le revêtement inférieur comprend au moins une couche haut-indice au contact de la couche absorbante.

Les valeurs d'indice de réfraction indiquées dans le présent document sont les valeurs mesurées comme habituellement à la longueur d'onde de 550 nm. Ces couche haut indice présentent, de préférence une épaisseur physique comprise entre 10 et 20 nm. Cette couche haut indice permet de maximiser la haute transmission lumineuse dans le visible de l'empilement et a une action favorable sur l'obtention de couleurs neutres, tant en transmission qu'en réflexion.

De telles couches haut-indice à base d'oxyde métallique sont choisies parmi telles que les couches d'oxyde de titane, d'oxyde de niobium ou les couches d'un alliage obtenu à partir de titane et de niobium.

Selon un mode de réalisation particulièrement avantageux, le revêtement inférieur comprend au moins la séquence de couches déposées dans l'ordre suivant :
- au moins une couche à haut indice de réfraction, en matériau d'indice de réfraction supérieur ou égal à 2,20, l'épaisseur physique de la couche à haut indice de réfraction ou la somme des épaisseurs physiques des couches à haut indice de réfraction étant comprise entre 10 et 40 nm,
- au moins une couche absorbante,
- au moins une couche d'oxyde de zinc.

Selon un mode de réalisation particulièrement avantageux, le revêtement supérieur comprend au moins la séquence de couches minces déposées dans l'ordre suivant au-dessus de la couche fonctionnelle:
- au moins une couche de blocage,
- au moins une couche à base à base d'oxyde de zinc,
- au moins une couche à haut indice de réfraction, en matériau d'indice de réfraction supérieur ou égal à 2,20, l'épaisseur physique de la couche à haut indice de réfraction ou la somme des épaisseurs physiques des couches à haut indice de réfraction étant comprise entre 10 et 40 nm,
- au moins une couche diélectrique présentant un indice de réfraction inférieur à 2,20 et une épaisseur supérieure à 5 nm situé au-dessus de la couche haut indice.

L'empilement de couches minces peut éventuellement comprendre une couche de protection. La couche de protection est de préférence la dernière couche de l'empilement, c'est-à-dire la couche la plus éloignée du substrat revêtu de l'empilement (avant traitement thermique). Ces couches ont en général une épaisseur comprise entre 0,5 et 10 nm, de préférence 1 et 5 nm. Cette couche de protection peut être choisie parmi une couche de titane, de zirconium, d'hafnium, de silicium, de zinc et/ou d'étain, ce ou ces métaux étant sous forme métallique, oxydée ou nitrurée.

Selon un mode de réalisation, la couche de protection est à base d'oxyde de zirconium et/ou de titane, de préférence à base d'oxyde de zirconium, d'oxyde de titane ou d'oxyde de titane et de zirconium.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluorés (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Selon un mode de réalisation préféré, le substrat est en verre, notamment silico-sodo-calcique ou en matière organique polymérique.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

L'invention concerne également un procédé de préparation d'un matériau comprenant un substrat transparent revêtu d'un empilement de couches minces déposées par pulvérisation cathodique éventuellement assistée par champ magnétique, le procédé comporte la séquence d'étapes suivantes :
- on dépose sur le substrat transparent au moins un revêtement inférieur comprenant une couche absorbante située entre deux couches diélectriques,
- on dépose une couche fonctionnelle à base d'argent, puis
- on dépose un revêtement supérieur au-dessus de la couche fonctionnelle.

L'invention concerne également un vitrage comprenant au moins un matériau selon l'invention. Le vitrage peut être sous forme de vitrage monolithique ou simple vitrage, de vitrage feuilleté ou d'un vitrage multiple.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

Le vitrage est de préférence choisi parmi les vitrages multiples, notamment un double-vitrage ou un triple vitrage, comportant au moins un matériau selon l'invention et au moins un second substrat, le matériau et le second substrat sont séparés par au moins une lame de gaz intercalaire, ledit vitrage réalisant une séparation entre un espace extérieur et un espace intérieur.

Ces vitrages présentent avantageusement :
- une réflexion lumineuse, coté intérieur et extérieur inférieure à 24 %, et/ou
- une couleur neutre en transmission avec un b*T inférieur à 6, et/ou
- une couleur bleue en réflexion avec un b*Rext et un b*Rint inférieur à -6 et éventuellement un a*Rext et un a*Rint inférieur à 5.

Ces vitrages sont montés sur un bâtiment ou un véhicule.

L'empilement est positionné dans le vitrage de préférences en face 2 de sorte que la lumière incidente provenant de l'extérieur traverse le revêtement diélectrique inférieur avant de traverser la couche métallique fonctionnelle.

Les exemples suivants illustrent l'invention.

### Exemples

### I. Préparation des substrats : Empilements, conditions de dépôt

Des empilements de couches minces définis ci-après sont déposés sur des substrats en verre sodo-calcique clair d'une épaisseur de 4 mm.

Dans les exemples de l'invention :
- les couches fonctionnelles sont des couches d'argent (Ag),
- les couches absorbantes sont en alliage de Nickel et de chrome (NiCr) ou en nitrure de titane (TiN).
- les couches de blocage sont des couches métalliques en alliage de nickel et de chrome (NiCr),
- les couches diélectriques sont à base de nitrure de silicium, dopé à l'aluminium (Si₃N₄ : Al), d'oxyde de zinc (ZnO), d'oxyde de zinc et d'étain (SnZnO) ou d'oxyde de titane (TiO₂).

Les conditions de dépôt des couches, qui ont été déposées par pulvérisation (pulvérisation dite « cathodique magnétron »), sont résumées dans le tableau 1.

| Tableau 1 | Cible employée | Pression de dépôt | Gaz |
|---|---|---|---|
| Ag | Ag | 3.10⁻³ mbar | Ar à 100 % |
| NiCr | Ni (80% at.) : Cr (20% at.) | 2-3.10⁻³ mbar | Ar à 100 % |
| TiN | Ti | 2,4.10⁻³ mbar | Ar /(Ar + N2) à 82 % |
| Ti | Ti | 7.10⁻³ mbar | Ar à 100 % |
| TiO₂ | TiOₓ | 2.10⁻³ mbar | Ar /(Ar + O2) à 90 % |
| Si₃N₄ | Si:Al à 92:8 % en poids | 3,2.10⁻³ mbar | Ar /(Ar + N2) à 55 % |
| SnZnO | Sn 47,2 Zn 52,8 | 4,610⁻³ mbar | Ar /(Ar + O2) à 64 % |
| TiO₂-TiZrO | TiOₓ 75,5-ZrO₂ 24,3 % mol. | 4,8.10⁻³ mbar | Ar /(Ar + O2) à 96 % |
| ZnO | Zn:Al à 98:2 % en poids | 1,8.10⁻³ mbar | Ar /(Ar + O2) à 63 % |

| | | | |
|---|---|---|---|
| At. = atomique. | | | |

### II. Paramètres influençant l'absorption

Plusieurs expérimentations ont été réalisées pour :
- mettre en évidence l'influence de la position de la couche absorbante sur l'absorption et
- prouver que la position choisie permet d'obtenir les propriétés colorimétriques recherchées à savoir l'aspect bleuté en réflexion.

La capacité d'absorber une longueur d'onde est proportionnelle :
- au carré de l'intensité du champ électrique généré en un point de l'empilement à cette longueur d'onde,
- à la dépendance spectrale.

### II.1. La dépendance spectrale

La dépendance spectrale dépend du matériau (nature intrinsèque) et de la longueur d'onde. Du point de vue de ce paramètre, les critères retenus pour déterminer les matériaux absorbants sont les suivants :
- une faible absorption des longueurs d'onde correspondant au bleu,
- une forte absorption des autres longueurs d'onde et notamment de celles correspondant au jaune.

Les matériaux les plus satisfaisants par rapport à ce paramètre sont les couches métalliques de nickel et de chrome et les couche de nitrure de titane.

### II.2. Détermination de la position privilégiée : Evaluation de l'amplitude du champ électrique

La dépendance entre l'amplitude du champ électrique et la position de la couche absorbante est illustrée par la figure 1. Cette figure représente l'amplitude du champ électrique (E² en unité arbitraire) à différentes longueurs en fonction de l'éloignement du substrat (en nm) pour un empilement type dont la succession de couches en partant du substrat est décrite en abscisse supérieure

L'empilement type comprend en partant du substrat la séquence de couches suivantes: TiOz / ZnO / Ag / ZnO / TiOz / SnZnO / SiN / a (Air).

Grâce à un logiciel approprié, il est possible de déterminer pour chaque longueur d'onde, le carré du champ électrique en fonction de la distance par rapport au substrat. Les longueurs d'onde choisies illustrent respectivement :
- 450 nm : le champ chromatique du bleu,
- 550 nm : le champ chromatique du vert,
- 700 nm : le champ chromatique du rouge,
- 900 nm : les IR.

On retrouve:
- en abscisse inférieure : la distance par rapport au substrat (en nm) représentant la position dans l'empilement avec 0 nm représentant la surface du substrat sur laquelle est déposé l'empilement,
- en abscisse supérieure, la nature des couches et leurs épaisseurs, par exemple, la première couche de TiOz au contact du substrat à une épaisseur d'environ 15 nm et la couche de ZnO sous l'argent une épaisseur d'environ 5 nm,
- en ordonnée, l'amplitude du carré du champ électrique (E2 en unité arbitraire).

Sachant que l'absorption est proportionnelle à l'amplitude du champ électrique, les observations suivantes peuvent être faites.

Le champ électrique est minimum pour toutes les longueurs d'onde au niveau de la couche d'argent car les empilements sont optimisés pour minimiser l'absorption dans la couche d'argent. On obtient ainsi une transmission lumineuse TL élevée.

L'absorption (toute longueurs d'ondes confondues) est moins efficace si la couche absorbante est placée près de la couche d'argent. Cela signifie que si la couche absorbante est placée près de la couche d'argent, une plus grande épaisseur sera nécessaire pour atteindre le niveau d'absorption qui serait obtenu si la couche absorbante était placée à proximité du substrat.

L'absorption dans la partie bleue du spectre est minimale près de la couche d'argent. Placer l'absorbeur à cette position permet d'éviter de provoquer un décalage de couleur vers le jaune.

A proximité du substrat, l'absorption dans la partie bleue du spectre (environ 450 nm) est élevée et l'absorption dans la partie rouge du spectre est relativement plus faible (environ 700 nm).

A proximité et en dessous de la couche d'argent, l'absorption est du même ordre de grandeur pour toutes les longueurs d'onde du visible (450 nm, de 550 nm et de 700 nm). Par conséquent, en plaçant la couche absorbante à cette position par rapport au substrat, on absorbe sélectivement plus de rouge que de bleu. La sélectivité d'absorption du rouge par rapport au bleu est meilleure. Cela permet d'éviter un décalage des couleurs vers le rouge.

Le demandeur met ainsi en évidence que, dans un empilement à une seule couche d'argent, l'intensité du champ électrique et donc l'absorption pour les courtes longueurs d'onde du visible correspondant au bleu, est particulièrement grande à proximité du substrat et diminue de manière très importante lorsque l'on se rapproche de la couche d'argent. Ces courtes longueurs d'onde sont de l'ordre de 400 à 450 nm.

Positionner la couche absorbante à proximité du substrat ne permettra pas d'obtenir en réflexion des teintes bleutée.

En revanche, si la couche absorbante est positionnée à proximité de la couche d'argent, l'absorption dans la partie bleu-vert du visible est plus faible et notamment relativement plus faible par rapport à l'absorption dans le rouge.

Positionner la couche absorbante à proximité de la couche d'argent comme revendiqué permet d'obtenir en réflexion des teintes bleutées et des couleurs non jaunes et transmission.

### III. Confirmation des résultats

### III.1. Impact de la position sur l'épaisseur de couche absorbante à utiliser

Afin de confirmer ces résultats, des simulations ont été réalisées pour déterminer, pour l'empilement type, quelles épaisseurs doivent être ajoutées selon la position de la couche absorbante pour réduire le facteur solaire de l'empilement type de 48,5 % à environ 44 %.

L'empilement type comprend en partant du substrat la séquence de couches suivantes: TiO₂ (19,5 nm) / ZnO (5 nm) / Ag (17,8 nm) / Ti (0,3 nm) / ZnO (5 nm) / TiO₂ (16,5 nm) / SnZnO (10,5 nm) / Si₃N₄ (14 nm) / TiO₂ (1 nm).

La couche absorbante est à base de NiCr.

| Position de la couche absorbante | Epaisseur NiCr FS 48,5 => 44 % |
|---|---|
| P1 : Entre le substrat et la 1ère couche de TiO₂ | 0,7 nm |
| P2 : Entre les couches de TiO₂ et ZnO | 0,9 nm |
| P3 : Entre les couches de ZnO et d'Ag | **1,1 nm** |
| P4 : Entre les couches d'Ag et de Ti | 1,0 nm |
| P5 : Entre les couches de TiO₂ et de SnZnO | 0,6 nm |

Ces résultats confirment que l'épaisseur nécessaire de couche absorbante pour atteindre le même niveau d'absorption est plus grande si la couche absorbante est placée près de la couche d'Ag (par rapport à près du substrat).

### III.2. Impact de la position sur la variation des couleurs sur les axes jaune-bleu et vert-rouge

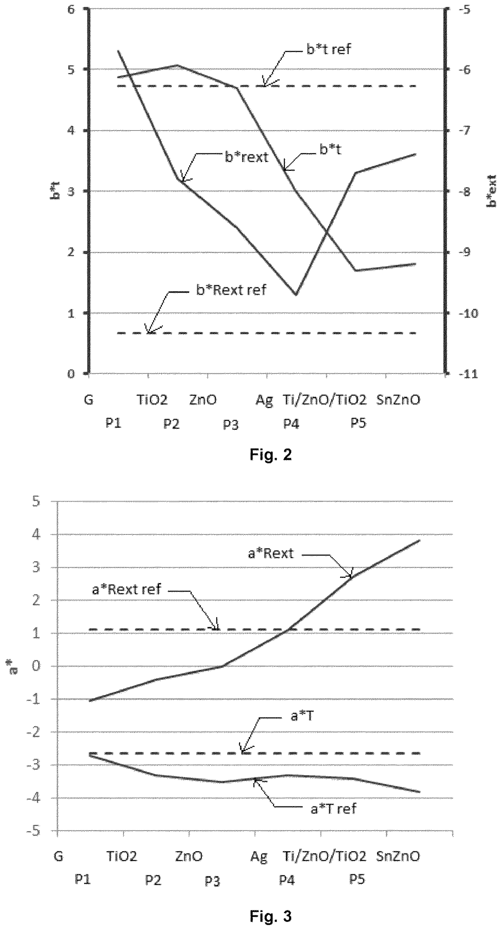

L'influence de la position de la couche absorbante sur la variation des couleurs est illustrée par les figures 2 et 3. La figure 2 illustre les variations des couleurs sur l'axe jaune-bleu et la figure 3 illustre les variations des couleurs sur l'axe vert-rouge.

Grâce à un logiciel approprié, il est possible de déterminer en fonction de la position de la couche absorbante dans un empilement type décrit ci-dessus (II.2), les couleurs Lab en transmission ou en réflexion. L'épaisseur de la couche absorbante est choisie de sorte que, peu importe la position considérée, le facteur solaire du matériau monté en double vitrage avec l'empilement en face 2 soit d'environ 44%.

Ces figures représentent respectivement :
- figure 2 : les variations des valeurs de b*T et b*Rext en fonction de la position de la couche absorbante dans l'empilement type,
- figure 3 : les variations des valeurs de a*T et a*Rext en fonction de la position de la couche absorbante dans l'empilement type.

Sur la figure 2, on trouve :
- en abscisse : les différentes positions P1 à P5 (définies ci-dessus) de la couche absorbante dans l'empilement type,
- en ordonnée à gauche : les valeurs de b*T,
- en ordonnée à droite : les valeurs de b*Rext.

Sur la figure 3, on trouve :
- en abscisse : les différentes positions P1 à P5 (définies ci-dessus) de la couche absorbante dans l'empilement type,
- en ordonnée: les valeurs de a*.

Les traits en pointillé « b*rext ref », « b*t ref », « a*rext ref » et « a*t ref » représentent respectivement les valeurs de b*Rext, b*T, a*Rext, a*T de l'empilement type (ou de référence) ne comprenant pas de couche absorbante.

Les courbes b*t, b*Rext, a*t et a*Rext représentent respectivement les valeurs de b*t, b*Rext, a*t et a*Rext en fonction de la position de la couche absorbante dans l'empilement.

Les observations suivantes peuvent être faites.

Pour les couleurs en réflexion, quelle que soit la position de la couche absorbante, son introduction conduit à un décalage des couleurs vers le jaune.

En effet, sur la figure 2, toutes les valeurs de b*rext sont supérieure à la valeur de b*Rext de l'empilement type (b*Rext ref). Cependant, lorsque la couche absorbante est placée à la position revendiquée (P2), ce décalage est moins prononcé et permet de rester avec des valeurs de b*Rext en dessous de -6.

Le décalage vers le jaune est beaucoup plus important lorsque la couche absorbante est placée en contact direct avec le substrat, et minimal lorsque couche absorbante est placé en contact direct avec la couche d'argent.

La figure 3 montre que la couleur en réflexion traduite par les valeurs de a* est fortement impactée et varie significativement avec la position de la couche absorbante. Lorsque la couche absorbante est placée aux positions P1, P2 ou P3, on observe un décalage vers le vert avantageux.

Placer la couche absorbante à la position revendiquée permet bien d'obtenir un couple de valeurs a* et b* en réflexion extérieur conférant une teinte bleutée.

Pour les couleurs en transmission, l'introduction de la couche absorbante à la position revendiquée :
- ne conduit pas à un décalage significatif des couleurs sur l'axe jaune-bleu (figure 2),
- conduit à un léger décalage vers le vert des couleurs sur l'axe vert-rouge (figure 3).

Il ressort du couple a*T et b*T que l'on observe en transmission une absence de décalage vers le jaune et un décalage vers le vert. Placer la couche absorbante à la position revendiquée permet bien d'obtenir un couple de valeurs a* et b* en transmission conférant une teinte non jaune voire plus neutre.

### III.3. Impact de la position de la couche absorbante sur la réflexion intérieure et extérieure

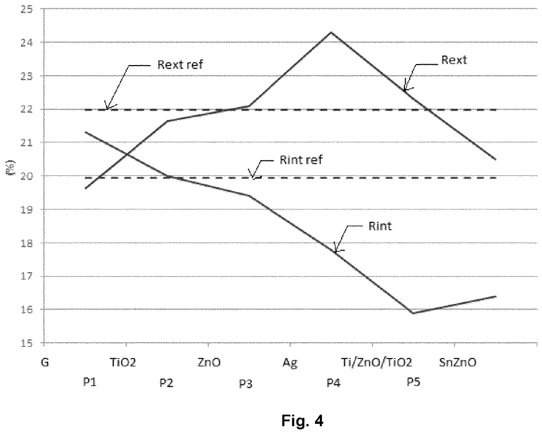

L'influence de la position de la couche absorbante sur la variation de la réflexion lumineuse intérieure et extérieure est illustrée par la figure 4.

Sur la figure 4, on trouve :
- en abscisse : les différentes positions P1 à P5 (définies ci-dessus) de la couche absorbante dans l'empilement type,
- en ordonnée: les valeurs de réflexion lumineuse en %.

Les traits en pointillé « Rext ref » et « Rint ref » représentent respectivement les valeurs de Rext et Rint de l'empilement type (ou de référence) ne comprenant pas de couche absorbante.

Les courbes « Rext » et « Rint » représentent respectivement les valeurs de Rext et Rint en fonction de la position de la couche absorbante dans l'empilement.

Placer la couche absorbante à la position revendiquée permet d'obtenir à la fois une réflexion intérieure et extérieure inférieure à 22%.

### IV. Performances « contrôle solaire » et colorimétrie

Le tableau 2 liste les matériaux et les épaisseurs physiques en nanomètres (sauf autre indication) de chaque couche ou revêtement qui constitue les empilements en fonction de leurs positions vis-à-vis du substrat porteur de l'empilement (dernière ligne en bas du tableau).

| Tableau 2 | Comp. 1 | Inv. 1 | Inv. 2 | Inv. 3 | Inv. 4 |
|---|---|---|---|---|---|
| Couche de protection : | | | | | |
| TiO₂ | 1 | 1 | 1 | 1 | 0,5 |
| Revêtement | | | | | |
| - Si₃N₄ | 16,5 | 15,9 | 13,1 | 14,4 | 12 |
| - SnZnO | - | - | - | - | 10 |
| - TiO₂ | 20 | 20 | 20 | 20 | - |
| - TiO₂-TiZrO | - | - | - | - | 17 |
| - ZnO | 5 | 5 | 5 | 5 | 6 |
| Couche blocage | | | | | |
| Ti | 0,3 | 0,3 | 0,3 | 0,3 | 0,2 |
| NiCr | - | - | - | - | - |
| Couche fonctionnelle | | | | | |
| Ag | 18,6 | 17,7 | 17,2 | 16,9 | 16,8 |
| Revêtement | | | | | |
| - ZnO | 5 | 5 | 5 | 5 | 5 |
| - Si₃N₄ | - | - | - | 5 | - |
| - NiCr | - | 1,9 | - | 1,2 | 0,5 |
| - TiN | - | - | 2,7 | - | - |
| - Si₃N₄ | - | - | - | 5 | - |
| - TiO₂ | 23 | 18,9 | 12,5 | 12,6 | 17,7 |
| - NiCr | 1,2 | - | - | - | - |
| Substrat verre (mm) | 4 | 4 | 4 | 4 | 4 |

Le tableau 3 ci-dessous liste les principales caractéristiques optiques mesurées lorsque les matériaux font partie de double vitrage de structure : 4-16-4 (Ar - 90%). L'empilement est positionné en face 2. La face 1 du vitrage étant la face la plus à l'extérieur du vitrage, comme habituellement.

| **Tableau 3** : Double vitrage structure 4-16-4 (Ar - 90%) monté avec l'empilement en face 2 | | | | | | |
|---|---|---|---|---|---|---|
| | Valeur cible | Comp.1 | Inv. 1 | Inv. 2 | Inv. 3 | Inv. 4 |
| TL% | ≈60-70% | 60,3 | 60,2 | 67,5 | 64,8 | 67,2 |
| RLext% | <25 | 14,4 | 19 | 19,2 | 17,1 | 23,5 |
| RLint% | <25 | - | - | - | - | 21,4 |
| FS | <45 | 40,1 | 40 | 44,1 | 41,5 | 44,0 |
| S | > 1,5 | 1,503 | 1,505 | 1,53 | 1,56 | 1,53 |
| - a*T | <0 | -4,4 | -5,2 | -4,4 | -4,9 | -3,3 |
| - b*T | < 6 | 4,4 | 4,2 | 4,8 | 5 | 5,6 |
| - a*Rext | <3 | 0,4 | 0,3 | 2,4 | 1,6 | 0,1 |
| - b*Rext | <-6 | -4,2 | -7,9 | -8,4 | -10,3 | -5,2 |
| - a*Rint | <3 | - | - | - | - | 2,4 |
| - b*Rint | <-6 | - | - | - | - | -9,6 |

| | | | | | | |
|---|---|---|---|---|---|---|
| FS : facteur solaire ; S : la sélectivité; - : non déterminé. | | | | | | |

L'exemple comparatif comp.1 ne permet pas d'obtenir l'aspect bleuté recherché. En effet, comme précédemment expliqué, la présence de la couche absorbante à proximité du substrat absorbe significativement les courtes longueurs d'onde visibles correspondant au bleu.

Les exemples selon l'invention permettent :
- de conserver les propriétés recherchées en termes de sélectivité (S > 1,5) et de réflexion extérieure et intérieure (< 25 %) et
- d'obtenir l'aspect esthétique recherché avec notamment des couleurs neutres en transmission mais surtout l'aspect bleuté en réflexion extérieure et intérieure se traduisant par des valeurs de b*Rext nettement inférieures à -6.

## Revendications

1. Matériau comprenant un substrat transparent revêtu d'un empilement de couches minces comprenant en partant du substrat :
- un revêtement inférieur comprenant :
- au moins une couche diélectrique,
- au moins une couche absorbante absorbant le rayonnement solaire dans la partie visible du spectre présentant une épaisseur comprise entre 0,2 et 9 nm,
- au moins une couche diélectrique,
- une seule couche métallique fonctionnelle à base d'argent,
- éventuellement une couche de blocage,
- un revêtement supérieur comportant au moins une couche diélectrique,
- éventuellement une couche de protection,
**caractérisé en ce que**
- la couche absorbante est séparée du substrat et de la couche fonctionnelle par une ou plusieurs couches diélectriques,
- l'épaisseur de toutes les couches diélectriques interposées entre la couche absorbante et la couche métallique fonctionnelle est comprise entre 3 et 18 nm.

2. Matériau selon la revendication 1 **caractérisé en ce que** lorsque le matériau est monté dans un double vitrage avec l'empilement positionné en face 2, le double vitrage présente :
- une sélectivité supérieure à 1,45,
- une réflexion lumineuse intérieure et extérieure inférieures à 25 %,
- une valeur de b* en réflexion extérieure inférieures à -5,
- une valeur de b* en réflexion intérieure inférieures à -5.

3. Matériau selon la revendication 1 ou 2 **caractérisé en ce que** l'épaisseur de toutes les couches diélectriques interposées entre la couche absorbante et le substrat est supérieure à 11 nm.

4. Matériau selon l'une quelconque des revendications précédentes **caractérisé en ce que** la couche absorbante est choisie parmi :
- les couches métalliques à base d'un métal ou d'un alliage métallique,
- les couches de nitrure métallique et
- les couches d'oxynitrure métallique,
d'un ou plusieurs éléments choisis parmi le palladium, le niobium, le tungstène, l'acier inoxydable, le titane, le chrome, le molybdène, le zirconium, le nickel, le tantale, le zinc.

5. Matériau selon l'une quelconque des revendications précédentes **caractérisé en ce que** le revêtement inférieur comprend une couche diélectrique à base d'oxyde de zinc située directement au contact de la couche métallique à base d'argent.

6. Matériau selon l'une quelconque des revendications précédentes **caractérisé en ce que** le revêtement inférieur comprend une couche haut-indice à base d'oxyde métallique, présentant un indice de réfraction supérieur à 2,20 et une épaisseur supérieure à 5 nm.

7. Matériau selon l'une quelconque des revendications précédentes **caractérisé en ce que** le revêtement inférieur comprend au moins la séquence de couches déposées dans l'ordre suivant :
- au moins une couche à haut indice de réfraction, en matériau d'indice de réfraction supérieur ou égal à 2,20, l'épaisseur physique de la couche à haut indice de réfraction ou la somme des épaisseurs physiques des couches à haut indice de réfraction étant comprise entre 10 et 40 nm,
- au moins une couche absorbante,
- au moins une couche d'oxyde de zinc.

8. Matériau selon l'une quelconque des revendications précédentes **caractérisé en ce que** le revêtement supérieur comprend au moins une couche haut-indice à base d'oxyde métallique, présentant un indice de réfraction supérieur à 2,20 et une épaisseur supérieure à 5 nm.

9. Matériau selon l'une quelconque des revendications précédentes **caractérisé en ce que** le revêtement supérieur comprend au moins la séquence de couches minces déposées dans l'ordre suivant au-dessus de la couche fonctionnelle:
- au moins une couche de blocage,
- au moins une couche à base à base d'oxyde de zinc,
- au moins une couche à haut indice de réfraction, en matériau d'indice de réfraction supérieur ou égal à 2,20, l'épaisseur physique de la couche à haut indice de réfraction ou la somme des épaisseurs physiques des couches à haut indice de réfraction étant comprise entre 10 et 40 nm,
- au moins une couche diélectrique présentant un indice de réfraction inférieur à 2,20 et une épaisseur supérieure à 5 nm situé au-dessus de la couche haut indice.

10. Matériau selon l'une quelconque des revendications précédentes **caractérisé en ce que** les couches haut-indice à base d'oxyde métallique sont choisies parmi les couches d'oxyde de titane, d'oxyde de niobium ou les couches d'un alliage obtenu à partir de titane et de niobium.

11. Matériau selon l'une quelconque des revendications précédentes, **caractérisé en ce que** le substrat est en verre, notamment silico-sodo-calcique ou en matière organique polymérique.

12. Vitrage multiple comprenant au moins un matériau selon l'une quelconque des revendications précédentes et au moins un second substrat, le matériau et le second substrat sont séparés par au moins une lame de gaz intercalaire.

13. Vitrage multiple selon la revendication 12, **caractérisé en ce que** le vitrage est un double vitrage présentant avec l'empilement positionné en face 2 :
- une sélectivité supérieure à 1,45,
- une réflexion lumineuse intérieure et extérieure inférieures à 25 %,
- une valeur de b* en réflexion extérieure b*Rext inférieures à -5,
- une valeur de b* en réflexion intérieure b*Rint inférieures à -5.

14. Vitrage selon l'une quelconque des revendications 12 à 13, **caractérisé en ce qu'**il présente une réflexion lumineuse intérieur et extérieur inférieures à 24 %.

15. Vitrage selon l'une quelconque des revendications 12 à 14, **caractérisé en ce qu'**il présente :
- une couleur neutre en transmission avec un b*T inférieur à 6,
- une couleur bleue en réflexion avec un b*Rext et un bRint inférieur à -6 et éventuellement un a*Rext et un a*Rint inférieur à 5.
